# EUROPEAN PATENT APPLICATION

(11) **EP 4 737 208 A1**
(43) Date of publication of application: **06.05.2026**
(21) Application number: 24832142.4
(22) Date of filing: 28.06.2024
(51) Int. Cl.: B60N 2/42, B60N 2/427, B60R 21/207

(54) **OCCUPANT PROTECTION DEVICE**

(30) Priority: 30.06.2023 JP 2023108678; 29.05.2024 WO PCT/JP2024/019637
(71) Applicant: Autoliv Development AB, 447 83 Vårgårda (SE)
(72) Inventor: ISHIGAKI, Ryota, Yokohama-shi, Kanagawa 222-8580 (JP); ABE, Kazuhiro, Yokohama-shi, Kanagawa 222-8580 (JP)
(74) Representative: Feucker, Max Martin
(86) International application number: PCT/JP2024/023644
(87) International publication number: WO 2025/005286

(57) **Abstract**

An occupant protection device that contributes to improving the restraint performance of a waist part of an occupant is disclosed. The occupant protection device (30) includes a push-up member (40) that can pivot to push up the seat surface (26) of the seat cushion (2), and a drive device (50) that applies a force to pivot the push-up member (40) in the event of a vehicle emergency. The push-up member (40) has a front part (42) located forward of the pivot center (41) in the front-to-back direction of the vehicle seat (100). The drive device (50) is positioned below the front part (42) of the push-up member (40) between the front part (42) of the push-up member (40) and the pivot center (41), and applies the force to the front part (42) of the push-up member (40).

## Description

### TECHNICAL FIELD

The present invention relates to an occupant protection device provided inside or below a seat cushion of a vehicle seat.

### BACKGROUND ART

In the event of a vehicle frontal collision, an occupant will move forward due to inertia. Patent Document 1 describes an occupant protection device which, in the event of such a frontal collision, raises a front-end portion of a seat cushion by instantaneously expanding an airbag in a vehicle seat, thereby suppressing forward movement of the waist part of an occupant.

### RELATED ART DOCUMENTS

### PATENT DOCUMENTS

Patent Document 1: Japanese Unexamined Patent Application 2007-118820

### SUMMARY OF THE INVENTION

### PROBLEM TO BE SOLVED BY THE INVENTION

In Patent Document 1, the airbag is secured to a seat pan and, when expanded, directly pushes up the lower front end of the seat cushion. However, depending on the characteristics of the seat cushion (such as softness or thickness), the force or amount of upward pressure exerted by the airbag may be insufficient, and the behavior or direction of the upward pressure may be unstable.

Furthermore, in Patent Document 1, when the airbag is expanded, the front-end part of the seat cushion pushes up the knees of the occupant. However, due to the manner in which the airbag is attached to the vehicle seat and arrangement position thereof, the knees of the occupant are not sufficiently raised. In order to effectively lift the occupant's knees, rather than pushing up only the occupant's knees as in Patent Document 1, pushing up the area around the thighs near the occupant's buttocks is preferable, lifting the entire area from the occupant's thighs to the knees, thereby applying a force that rotates the occupant's pelvis in a clockwise direction.

An object of the present invention is to provide an occupant protection device that contributes to improving the waist part restraining performance of an occupant.

### MEANS FOR SOLVING THE PROBLEM

An occupant protection device according to an aspect of the present invention is provided inside or below a seat cushion of a vehicle seat, the occupant protection device including:
a push-up member that is pivotable so as to push up a seat surface of the seat cushion; and
a drive device that applies, during a vehicle emergency, a force that causes the push-up member to pivot, wherein
the push-up member includes a front part located forward of a pivot center in the front-to-back direction of the vehicle seat, and
the drive device is disposed, of a space between the front part of the push-up member and the pivot center, below the front part of the push-up member, and is configured to apply the force to the front part of the push-up member.

With this aspect, the drive device is positioned near (below) the portion of the push-up member that receives the force (front part), so that the force from the drive device can be applied immediately (in other words, directly or without dissipating the force) to the front part of the push-up member. This facilitates ensuring the force/amount of push-up on the seat surface.

In addition, the push-up is not caused by the airbag itself, as was done conventionally, but by the rotating push-up member, so the push-up occurs along the path of rotation. This facilitates stabilizing the behavior or direction of the push-up.

This rotation direction may be a direction in which a force acts to pivot the pelvis of the occupant in a clockwise direction. Therefore, when the push-up member is positioned to push up the area around the thighs near the buttocks of the occupant who is sitting on the seat cushion in a normal posture with a seat belt fastened, the entire area from the occupant's thighs to the knees can be lifted, and a rotational force in the clockwise direction can be applied to the occupant's pelvis. Therefore, forward movement of the waist part of the occupant can be reduced, and the occurrence of the submarine phenomenon can be suppressed, thereby improving the waist part restraint performance of the occupant.

An occupant protection device according to another aspect of the present invention is provided inside or below a seat cushion of a vehicle seat, the occupant protection device including:
an airbag cushion that can be expanded and deployed;
an inflator that supplies gas for expansion and deployment into an internal space of the airbag cushion during a vehicle emergency; and
an inclined part that is disposed on a rearward side when the seat cushion is divided into front and rear portions at a central position in a front-to-back direction, the inclined part being inclined upward toward a front side, wherein
the airbag cushion is disposed on one or both of an upper side or a lower side of the inclined part, and
the airbag cushion and/or the inclined part is configured to push up a seating surface of the seat cushion in a diagonally rearward direction by expansion and deployment of the airbag cushion.

With such an aspect, since the inclined part is disposed on a relatively rearward side of the seat cushion, the vicinity of thighs close to buttocks of an occupant (assuming that the occupant is seated on the seat cushion in a normal posture and has a seat belt fastened) can be pushed up in a diagonally rearward direction by the inclined part that receives expansion and deployment from the airbag cushion and/or by the airbag cushion that expands and deploys with the inclined part serving as a reaction surface. As a result, a rotational force in the clockwise direction can be applied to the pelvis of the occupant, similar to that described above. Therefore, forward movement of the waist part of the occupant can be reduced, and the occurrence of the submarine phenomenon can be suppressed, thereby improving restraint performance for the waist part of the occupant.

### BRIEF DESCRIPTION OF THE DRAWINGS

FIG. 1A is a perspective view depicting an external shape of a vehicle seat provided with an occupant protection device according to Embodiment 1.
FIG. 1B is a perspective view depicting a frame structure inside the vehicle seat of FIG. 1A.
FIG. 2 is a diagram depicting the occupant protection device according to Embodiment 1 in a side cross section of a vehicle seat.
FIG. 3 is a diagram describing the arrangement and operation of the occupant protection device according to Embodiment 1 in relation to the occupant, where (a) depicts normal operation, (b) depicts the early stage of a vehicle emergency, and (c) depicts the middle or late stage of a vehicle emergency.
FIG. 4 is a diagram depicting a modified example of the drive device according to Embodiment 1, in which (a) is an overall view similar to FIG. 2, and (b) is an enlarged view of part B in (a).
FIG. 5 is a diagram depicting an occupant protection device according to Embodiment 2 in a side cross section of a vehicle seat.
FIG. 6 is a diagram depicting an occupant protection device according to a modified example of Embodiment 2.
FIG. 7 is a diagram describing the arrangement and operation of the occupant protection device according to Embodiment 2 in relation to the occupant, where (a) depicts normal operation, (b) depicts the middle stage of a vehicle emergency, and (c) depicts the late stage of a vehicle emergency.
FIG. 8 is a diagram describing the effect of the occupant protection device according to Embodiment 2 from another perspective, in which (a) depicts a comparative example and (b) depicts Embodiment 2.
FIG. 9 is a diagram depicting an occupant protection device according to another modified example of Embodiment 2.
FIG. 10 is a diagram depicting an occupant protection device according to still another modified example of Embodiment 2.
FIG. 11 is a diagram depicting an occupant protection device according to yet another modified example of Embodiment 2.
FIG. 12 is a diagram depicting an occupant protection device according to Embodiment 3 in a side cross section of a vehicle seat.
FIG. 13 is a perspective view depicting a reinforcing beam of an occupant protection device according to Embodiment 3.
FIG. 13A is a cross-sectional view along A-A in FIG. 13.
FIG. 13B is a cross-sectional view along B-B in FIG. 13.
FIG. 14 is a perspective view depicting a reinforcing beam according to another embodiment.
FIG. 15 is a perspective view depicting a reinforcing beam according to yet another embodiment.
FIG. 15A is a cross-sectional view along C-C in FIG. 15.
FIG. 16A is a perspective view depicting, with a part thereof omitted, the front part of a vehicle seat equipped with an occupant protection device according to Embodiment 3.
FIG. 16B is a perspective view of FIG. 16A with a reinforcing beam additionally depicted, and cut in half in the seat width direction.
FIG. 16C is a partially enlarged view of FIG. 16B.
FIG. 17 is a partially enlarged view of the occupant protection device according to Embodiment 3, with the airbag cushion folded.
FIG. 18 is a partially enlarged view of the occupant protection device according to Embodiment 3, with the airbag cushion expanded and deployed.
FIG. 19 is a graph depicting the effect of the occupant protection device according to Embodiment 3, depicting the relationship between the reaction force that the occupant receives from the seat pan in the event of a vehicle emergency and the passage of time.
FIG. 20 is a graph depicting the effect of the occupant protection device according to Embodiment 3, depicting the relationship between the chest deflection of the occupant and the passage of time in the event of a vehicle emergency.
FIG. 21 is a perspective view depicting a modified example of the occupant protection device according to Embodiment 3, in which the seat pan and the reinforcing beam are integrally formed.
FIG. 22 is a partially enlarged view of an example obtained by further modifying the modified example of FIG. 21.
FIG. 23 is a plan view depicting the relationship between a folded airbag cushion and a seat pan 424 before expansion and deployment in yet another modified example of the occupant protection device according to Embodiment 3.
FIG. 23A is a cross-sectional view along A-A in FIG. 23.
FIG. 24 is a diagram depicting yet another modified example of the occupant protection device according to Embodiment 3.

### EMBODIMENTS OF THE INVENTION

An occupant protection device according to preferred embodiments of the present invention will be described with reference to the accompanying drawings. In the present document, up and down, left and right, and front and rear are defined as follows. When an occupant is seated in a seat (vehicle seat) in a regular posture, a direction the occupant faces is referred to as the front, a opposite direction is referred to as the rear, and a direction indicating a coordinate axis is referred to as a front-to-back direction. Furthermore, when the occupant is seated in the vehicle seat in a regular posture, the right of the occupant is referred to as a right direction, the left of the occupant is referred to as a left direction, and a direction indicating a coordinate axis is referred to as the left-right direction or the seat width direction. Similarly, when the occupant is seated in a regular posture, a head direction of the occupant is referred to as up, a waist part direction of the occupant is referred to as down, and a direction indicating a coordinate axis is referred to as an up-down direction.

Furthermore, "occupant" in the present document is an occupant/passenger in accordance with a frontal collision test dummy (Hybrid III AM50; human body dummy for frontal collision test set forth in specification [49CFR Part 572 Subpart E and O] of NHTSA [National Highway Traffic Safety Association]) with a physique equivalent to the average male in the United States, having an approximate size of 175 cm height, 88 cm sitting height, and 78 kg weight.

### [Embodiment 1]

As described above, a problem with conventional occupant protection devices that are provided inside or below the seat cushion of a vehicle seat is that, for example, the airbag directly pushes the lower front end of the seat cushion upward (vertically), and the force or amount of pushing up by the airbag is insufficient to effectively lift the occupant's knees.

To solve this problem, the occupant protection device of embodiment 1 includes a push-up member that can pivot to push up the seat surface of the seat cushion, and a drive device that applies a force to pivot the push-up member in the event of a vehicle emergency. Furthermore, the push-up member has a front part forward of the pivot center in the front-to-back direction of the vehicle seat, and the drive device is positioned below the front part of the push-up member between the front part of the push-up member and the pivot center, and is configured to apply the force to the front part of the push-up member.

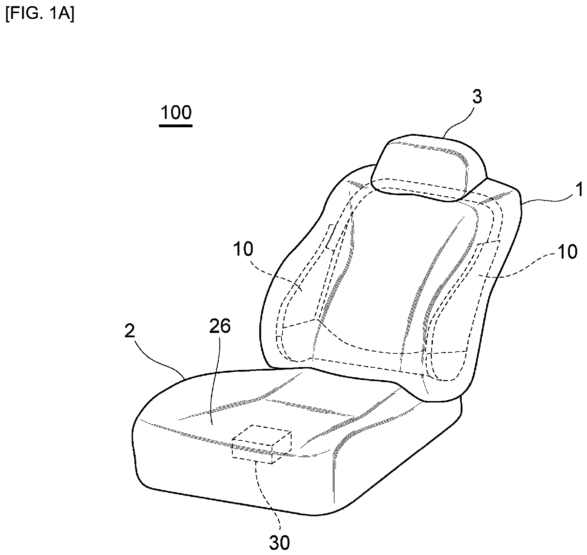

A specific example of the occupant protection device according to Embodiment 1 will be described below with reference to FIGS. 1A to 4.

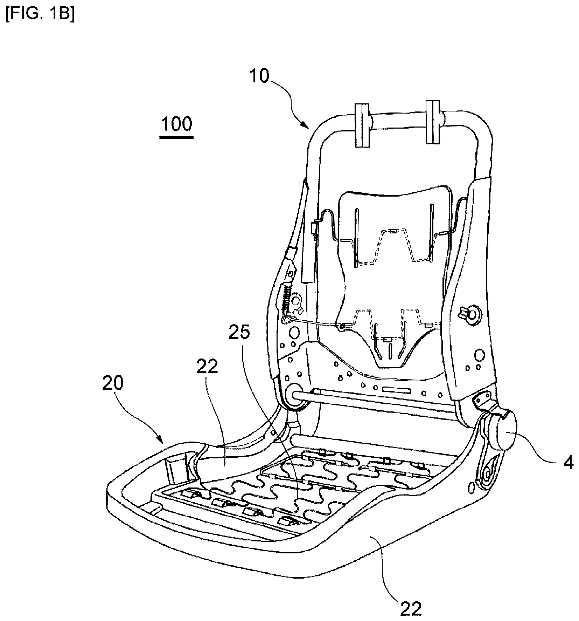

As depicted in FIG. 1A and 1B, the vehicle seat 100 is provided with a seat back 1 that supports the back of an occupant, a seat cushion 2 on which the occupant is seated, and a headrest 3 that supports the head of the occupant. The vehicle seat 100 is, for example, a driver seat or passenger seat, but may be a rear seat.

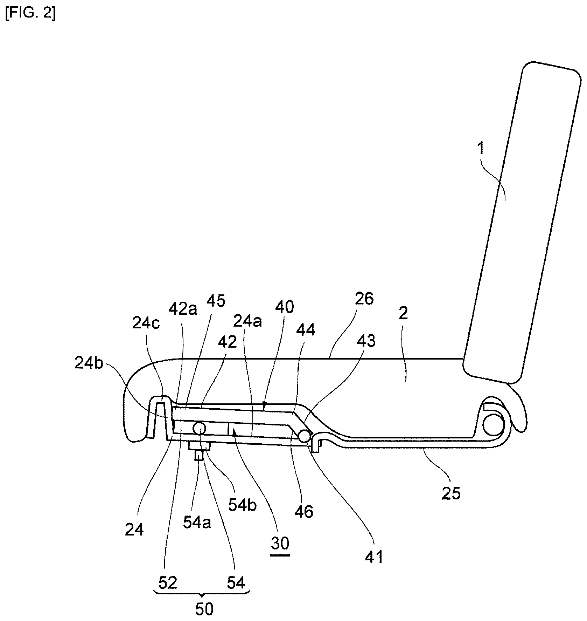

A back frame 10 and a seat frame 20 that form the framework of the seat are provided inside the seat back 1 and the seat cushion 2, respectively. The back frame 10 and the seat frame 20 are made of processed metal components or hard resin, and are connected to each other via a reclining mechanism 4. The seat frame 20 has a pair of side frames 22, 22 spaced apart from each other on the left and right, and a seat pan 24 (see FIG. 2) is constructed between the front parts of the pair of side frames 22, 22. The seat pan 24 is positioned below the front part of the seat cushion 2, and a spring 25 for supporting the seat cushion 2 is provided behind the seat pan 24.

The seat cushion 2 has, for example, a seat pad made of a urethane foam material or the like covering a surface and perimeter of the seating frame 20, and a seat cover made of leather, fabric or the like covering a surface of the seat pad. An upper surface of the seat cover constitutes a surface on which the occupant sits, in other words, a seat surface 26 of the seat cushion 2.

The occupant protection device 30 is provided inside or below the seat cushion 2. For example, the occupant protection device 30 is provided inside the seat cushion 2 and is covered by the seat cover. In this case, the occupant protection device 30 may be provided on an upper surface of the seat pan 24. Alternatively, if the seat pan 24 is not provided, placing in the seating frame 20 is possible. In another example, the occupant protection device 30 is provided below the seat cushion 2 instead of inside the seat cushion 2. In this case, for example, the occupant protection device 30 is mounted on a bracket secured to the vehicle seat 100 below the seat cushion 2. Hereinafter, an example in which the occupant protection device 30 is provided on the upper surface of the seat pan 24 will be described.

As depicted in FIG. 2, the occupant protection device 30 includes a push-up member 40 that can pivot to push up a seat surface 26 of the seat cushion 2, and a drive device 50 that applies a force to pivot the push-up member 40 in the event of a vehicle emergency. An example of a vehicle emergency is a frontal collision of a vehicle.

The push-up member 40 has a front part 42 located forward of the pivot center 41. The front part 42 is a portion that includes a front end 42a of the push-up member 40, and refers to the portion of the push-up member 40 that is located on the front side. For example, if the push-up member 40 is cut in half at the midpoint in the front-to-back direction, the front half can be said to include at least the front part 42 and the rear half can be said to include at least the rear part 43. As will be described in detail later, the force from the drive device 50 to the push-up member 40 is not applied to the rear part 43 but is applied only to the front part 42.

The push-up member 40 has a rear end rotatably supported on the seat pan 24, and the rear end (shaft-support portion) constitutes a pivot center 41. In another embodiment, the rear end of the push-up member 40 may be rotatably supported on the seat frame 20 or the pair of side frames 22, 22 instead of the seat pan 24.

The push-up member 40 is formed out of a hard material (for example, metal or hard resin). For example, the push-up member 40 is formed in a plate shape from a material harder than the seat cushion 2 and an airbag cushion 52 (described later).

The push-up member 40 is disposed between the seat cushion 2 and the seat pan 24 and extends in the left-right direction. The push-up member 40 is positioned between the pair of side frames 22, 22, and the length in the left-right direction (in other words, the width) of the push-up member 40 is, for example, slightly shorter than the length between the pair of side frames 22, 22.

The push-up member 40 is bent once in the front-to-back direction between the pivot center 41 and the front part 42. The bent location 44 is positioned above an imaginary line connecting the pivot center 41 and the front end 42a of the front part 42. In other words, the push-up member 40 extends forward from the pivot center 41 toward the front part 42, then extends upward from the pivot center 41, and then extends toward a front end 42a with a direction changed at a bent location 44.

The front part 42 of the push-up member 40 extends parallel to the mounting surface 24a of the seat pan 24. Here, the mounting surface 24a is a flat, substantially horizontal surface. In addition, a portion 45 from the front end 42a of the front part 42 to the bent location 44 is parallel to the mounting surface 24a and extends in a substantially horizontal direction. On the other hand, a portion 46 from the bent location 44 to the pivot center 41 is not parallel to the mounting surface 24a, but forms an acute angle with respect to the mounting surface 24a, and is inclined upward toward the front. The former straight portion 45 is longer in the front-to-back direction than the latter inclined portion 46.

The front end 42a of the push-up member 40 faces a front wall 24b of the seat pan 24. The front wall 24b extends upward from the front end of the mounting surface 24a of the seat pan 24, and the push-up member 40 is provided at a position lower than an upper end 24c of the front wall 24b. The front wall 24b is formed in an inverted U-shaped cross section, and the foldedback portion of this U forms the upper end 24c. There is a space between the push-up member 40 and the mounting surface 24a, and a drive device 50 is provided in the front portion of this space.

The drive device 50 is disposed below the front part 42 of the push-up member 40 between the front part 42 and the pivot center 41. The drive device 50 is configured to apply, to the front part 42, a force that causes the push-up member 40 to pivot (hereinafter referred to as a "pivoting force"). In other words, the pivoting force from the drive device 50 to the push-up member 40 is not applied to the rear part 43 but is applied only to the front part 42.

The drive device 50 includes an airbag cushion 52 that can be expanded and deployed, and an inflator 54 that supplies gas for expansion and deployment into the internal space of the airbag cushion 52 in the event of a vehicle emergency.

The inflator 54 is electrically connected to a vehicle-side ECU. For example, the inflator 54 receives a signal that an impact upon a frontal collision of the vehicle has been detected from the vehicle side ECU and operates to instantly supply the gas to the airbag cushion 52. The inflator 54 can be one of various types of inflators, such as inflators filled with a gas-generating agent, compressed gas, or both, and the like. By way of example, the inflator 54 has an ignition device at an open-end part of a cylindrical body with a bottom. Furthermore, when a gas-generating agent in the cylindrical body is ignited using the ignition device, gas is generated, and the gas for expansion and deployment is supplied into the airbag cushion 52 from a plurality of discharge holes located on a peripheral surface of the cylindrical body.

The airbag cushion 52 is a bag body and expands and deploys by receiving the supply of gas from the inflator 54. The airbag cushion 52 is formed, for example, by joining (sewing or adhering) a plurality of pieces of base fabric made of a non-woven fabric or the like at appropriate positions. The airbag cushion 52 is disposed on the mounting surface 24a of the seat pan 24 in, for example, a folded state. The folding manner is arbitrary, and may be, for example, an accordion-like shape, a roll-like shape, or a combination thereof.

The airbag cushion 52 can be attached to the seat pan 24 in a variety of ways. For example, the airbag cushion 52 may be attached to the seat pan 24 at the front and/or rear portion thereof and/or at an intermediate portion thereof via fasteners such as bolts or rivets. In this case, the attachment point of the airbag cushion 52 to the seat pan 24 may also serve as the attachment point for attaching the inflator 54 to the seat pan 24. For example, when the aforementioned cylindrical body with a bottom is used as the inflator 54, an axial direction of the cylindrical body is aligned with the left-right direction, and the cylindrical body is accommodated inside the airbag cushion 52. Furthermore, the stud bolt 54a protruding from the outer periphery of the cylindrical body is caused to protrude outside the airbag cushion 52, and inserted through the seat pan 24 from the mounting surface 24a side, and is fastened to the seat pan 24 by a nut 54b. In this manner, the inflator 54 and the airbag cushion 52 are fastened together to the mounting surface 24a of the seat pan 24 by the stud bolt 54a and nut 54b.

The airbag cushion 52 and inflator 54 are positioned below the front part 42 of the push-up member 40. When gas is supplied from the inflator 54, the airbag cushion 52 begins to expand and deploy below the front part 42 of the push-up member 40, contacts the lower surface of the front part 42, and applies a pivoting force to the front part 42. When the pivoting force is applied, the push-up member 40 pivots clockwise around the pivot center 41, pushing up the lower part of the seat cushion 2 and pushing up the seat surface 26.

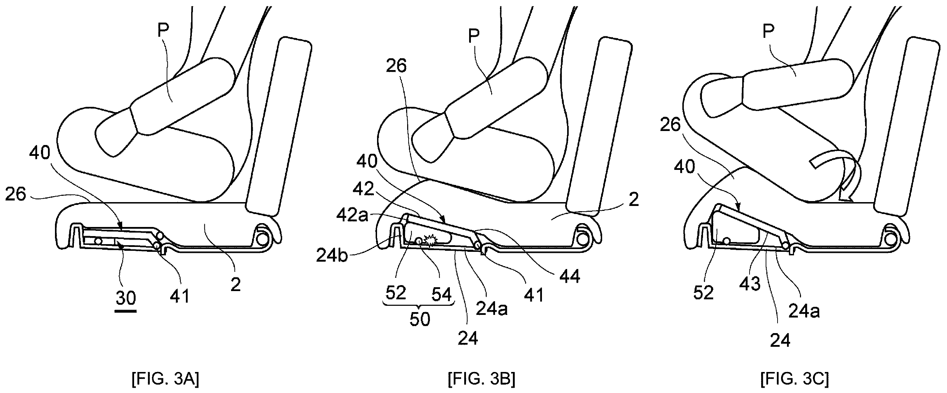

FIG. 3 is a diagram depicting the arrangement and operation of the occupant protection device 30 in relation to the occupant P. Here, (a) depicts normal time, (b) depicts the early stage of a vehicle emergency, and (c) depicts the middle or late stage of a vehicle emergency.

In FIG. 3(a), the occupant P is seated on the seat cushion 2 in a normal posture and has a seat belt (not depicted) fastened. The occupant protection device 30 is disposed in a position where the push-up member 40 pushes up the vicinity of the thighs of the occupant P, close to the buttocks. For example, the pivot center 41 of the push-up member 40 is positioned below the thighs of the occupant P near the buttocks.

As depicted in FIG. 3(b), in the initial stage of a vehicle emergency, the inflator 54 first supplies gas to the airbag cushion 52 immediately. Then, the airbag cushion 52 starts to expand and deploy below the front part 42 of the push-up member 40. At this time, the airbag cushion 52 expands and deploys upward with the mounting surface 24a of the seat pan 24 acting as a reaction surface. Additionally, the airbag cushion 52 is guided to expand and deploy upward with the front wall 24b of the seat pan 24 acting as a reaction surface. In other words, as the airbag cushion 52 expands and deploys forward, the airbag comes into contact with the front wall 24b, receives a reaction force from the front wall 24b, and continues to expand and deploy upward in the direction in which the front wall 24b extends.

The airbag cushion 52 expanding upward immediately hits the front part 42 of the push-up member 40 and applies a pivoting force to the front part 42. As a result, the push-up member 40 starts to pivot. The push-up member 40 pivots along an arcuate path centered on the pivot center 41, and pushes up the lower part of the seat cushion 2, thereby pushing up the seat surface 26. After the pushing-up force starts to be input from the front part 42 of the push-up member 40 to the seat cushion 2, the seat surface 26 of the seat cushion 2 is pushed up by the entire portion of the push-up member 40 that was initially horizontal (the portion 45 from the front end 42a of the front part 42 to the bent location 44).

At this time, in relation to the occupant P, the push-up member 40 begins to lift the vicinity of the thighs of the occupant P, which are close to the buttocks, via the seat surface 26. Note that in the event of a frontal collision of the vehicle, the occupant P will tend to move forward due to inertia, but the seat belt will restrain the waist part and restrict forward movement of the waist part.

As depicted in FIG. 3(c), as the airbag cushion 52 continues to expand and deploy, the push-up member 40 pivots further, pushing up the seat surface 26 further. The push-up member 40 pivots relative to the mounting surface 24a of the seat pan 24 at an angle of, for example, a maximum of 5 degrees or more, preferably 10 to 20 degrees. In the case of a seat structure for a small truck classified as a mini truck, the angle is preferably set to 5 to 15 degrees. Note that when expanded and deployed, the airbag cushion 52 is not in contact with the rear part 43 of the push-up member 40. In other words, space is maintained between the rear part 43 of the push-up member 40 and the seat pan 24.

In relation to the occupant P, the push-up member 40 further lifts the vicinity of the thighs near the buttocks of the occupant P via the seat surface 26, and lifts the entire area from the thighs to the knees of the occupant P. This causes a force to act on the pelvis of the occupant P, causing rotation in a clockwise direction. This action prevents the vertebrae of the occupant P from being pushed up, and keeps the spine of the occupant P lower. In other words, since the spine is not pushed up, no phase difference occurs in the ribs, and no burden is placed on the chest of the occupant P, while the forward movement of the waist part of the occupant P is suppressed and the occurrence of the submarine phenomenon is suppressed.

As described above, the occupant protection device 30 of Embodiment 1 includes a push-up member 40 that can pivot to push up the seat surface 26 of the seat cushion 2, and a drive device 50 that applies a force to pivot the push-up member 40 in the event of a vehicle emergency, the push-up member 40 has a front part 42 that is forward of the pivot center 41 in the front-to-back direction of the vehicle seat 100, and the drive device 50 is arranged below the front part 42 of the push-up member 40 between the front part 42 of the push-up member 40 and the pivot center 41, and is configured to apply the force to the front part 42 of the push-up member 40.

With this configuration, the drive device 50 is positioned near (below) the portion of the push-up member 40 that receives the force (front part 42), so that the force from the drive device 50 can be applied immediately (in other words, directly or without dissipating the force) to the front part 42 of the push-up member 40. This enables ensuring the force/amount of push-up on the seat surface 26. In addition, since the push-up is not caused by the airbag itself but by the rotating push-up member 40, the push-up occurs along the path of the rotation. This facilitates stabilizing the behavior or direction of the push-up. This rotation direction acts as a force that pivots the pelvis of the occupant P in a clockwise direction, which contributes to improving the waist part restraint performance of the occupant P, such as by suppressing the occurrence of the submarine phenomenon described above.

In particular, in one aspect of Embodiment 1, the drive device 50 includes an airbag cushion 52 that can be expanded and deployed and an inflator 54 that supplies gas for expansion and deployment to the internal space of the airbag cushion 52 in the event of a vehicle emergency, and the airbag cushion 52 is configured to begin expansion and deployment below the front part 42 of the push-up member 40 and apply the force to the front part 42 of the push-up member 40.

With such a configuration, the push-up member 40 functions as a pressure-receiving plate that receives the expansion and deployment force of the airbag cushion 52, and the expansion and deployment force of the airbag cushion 52 can be applied to the front part 42 of the push-up member 40 without allowing the force to escape.

In addition, in one aspect of Embodiment 1, the airbag cushion 52 is configured to not contact the rear part 43 of the push-up member 40 when expanded and deployed.

With this configuration, the expansion and deployment force of the airbag cushion 52 can be input in a concentrated manner to the front part 42 of the push-up member 40.

In an aspect of Embodiment 1, the airbag cushion 52 is disposed on the mounting surface 24a of the seat pan 24 and is configured to expand and deploy upward with the mounting surface 24a as a reaction surface.

With this configuration, rotation of the push-up member 40 can be promoted. In particular, since the mounting surface 24a is a flat surface, the airbag cushion 52 can be more easily expanded and deployed upward and the airbag cushion 52 can be more easily positioned.

In addition, in an aspect of Embodiment 1, the push-up member 40 has a bent location 44 above an imaginary line connecting the front end 42a of the front part 42 and the pivot center 41.

With this configuration, the front part 42 of the push-up member 40 can start pushing up the seat surface 26 at an earlier timing than when the push-up member is not bent. Furthermore, the space below the front part 42 of the push-up member 40 can be made smaller than when the push-up member is not bent. Thus, the distance between the front part 42 of the push-up member 40 and the input part of the pivoting force by the drive device 50 (here, the airbag cushion 52) can be minimized, allowing the pivoting force to be input to the front part 42 efficiently, and also allowing the front part 42 to be separated as far as possible from the seat surface 26, thereby suppressing the impact of the push-up member 40 on sitting comfort under normal conditions.

Embodiment 1 described above is for ease of understanding of the present invention and is not intended to be construed as limiting the present invention. Elements included in Embodiment 1, as well as arrangements, materials, conditions, shapes, sizes, and the like thereof, are not limited to those exemplified, but rather can be appropriately changed.

For example, the drive device 50 may be something other than the combination of the airbag cushion 52 and the inflator 54. For example, the drive device 50 may include various structures such as various actuators including a motor, a piston, a gear mechanism, a cam mechanism, and a slide mechanism. An example will be described below.

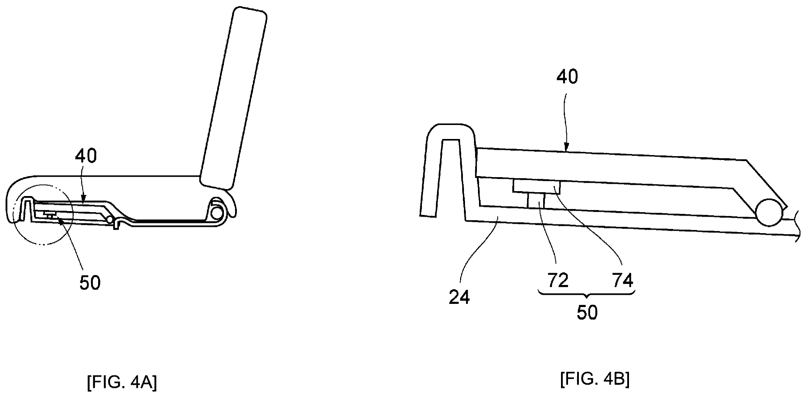

As depicted in FIG. 4, the drive device 50 has a power source 72 and a power transmission part 74 that connects the power source 72 to the push-up member 40 and transmits power from the power source 72 to the push-up member 40 to apply a pivoting force to the front part 42 of the push-up member 40. The power transmission part 74 has, for example, a piston connected to the lower surface of the front part 42 of the push-up member 40 and a cylinder in which the piston is slidably accommodated. The power source 72 is, for example, composed of a gas generating apparatus capable of supplying high-pressure gas into the cylinder, is electrically connected to the vehicle-side ECU, and, similar to the inflator 54, operates based on a signal received from the vehicle-side ECU. When the power source 72 is activated, high-pressure gas is supplied into the cylinder, and the high-pressure gas moves the piston, thereby applying a pivoting force to the front part 42 of the push-up member 40.

### [Embodiment 2]

Conventional occupant protection devices also have other problems, separate or related to those mentioned above. Specifically, conventionally, airbag cushions are mounted on flat or low-angle seat pans, which means that when an occupant is restrained, the airbag cushion tends to roll toward the front of the vehicle or become crushed. When a vehicle undergoes a frontal collision and an occupant moves forward, once the occupant reaches a vertex of the expansion part (for example, a spherical shape) of an airbag cushion, a reaction force from the airbag cushion is difficult to obtain during further forward movement. As a result, restraint performance is reduced, allowing the occupant's hips to rotate forward and the upper torso to move forward. The impact of such a problem can become greater as a configuration places the airbag cushion relatively farther forward on the seat cushion, as in conventional configurations.

To solve this problem, the occupant protection device according to Embodiment 2 employs an approach different from that of the occupant protection device according to Embodiment 1. In other words, the occupant protection device of Embodiment 2 is an occupant protection device that is provided inside or below the seat cushion of a vehicle seat, and includes an airbag cushion that can be expanded and deployed, an inflator that supplies gas for expansion and deployment to the internal space of the airbag cushion in the event of a vehicle emergency, and an inclined part that is positioned on the rear side when the seat cushion is divided into front and rear halves at the center position in the front-to-back direction and that is inclined upward toward the front. Furthermore, the airbag cushion is then positioned above or below the inclined part or both above and below the inclined part. When the airbag cushion is expanded and deployed, the airbag cushion or the inclined part pushes up the seat surface of the seat cushion obliquely rearward.

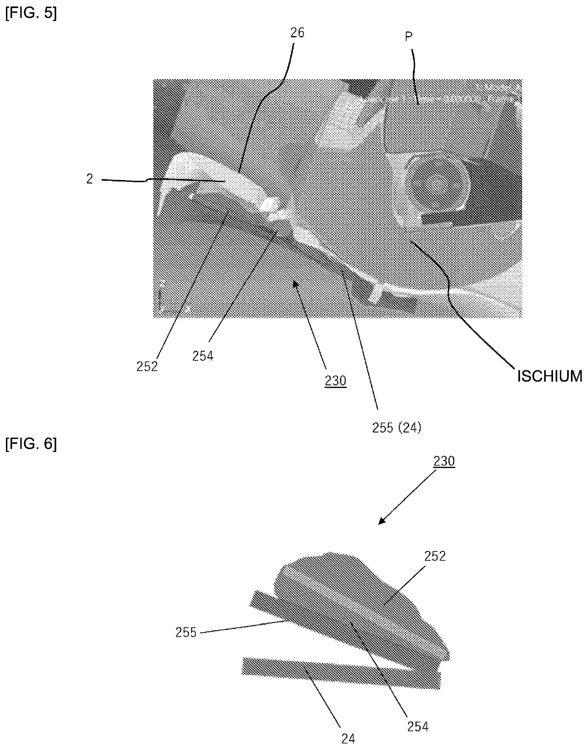

A specific example of the occupant protection device according to Embodiment 2 will be described below with reference to FIGS. 5 to 11. However, for structural elements in Embodiment 1, the description will be omitted and the same or similar structural element codes will be used.

As depicted in Figure 5, an occupant protection device 230 includes an airbag cushion 252 that can be expanded and deployed, an inflator 254 that supplies gas for expansion and deployment into the internal space of the airbag cushion 252 in the event of a vehicle emergency, and an inclined part 255 that is arranged on the rear side when the seat cushion 2 is divided into front and rear halves at the center position in the front-to-back direction and is inclined upward toward the front. Here, the airbag cushion 252, inflator 254 and inclined part 255 are provided inside the seat cushion 2.

The airbag cushion 252 and the inflator 254 are similar to the airbag cushion 52 and the inflator 54 of Embodiment 1. However, the airbag cushion 252 is disposed above the inclined part 255. Here, the airbag cushion 252 is disposed on the upper surface of the inclined part 255. Furthermore, the airbag cushion 252 then expands and deploys with the inclined part 255 serving as a reaction surface, pushing up the seat surface 26 of the seat cushion 2. The direction in which the airbag cushion 252 is promoted to expand and deploy is a direction perpendicular to the inclination direction of the inclined part 255, and is thus a direction that pushes the seat surface 26 obliquely rearward.

The inclined part 255 can be made of metal, resin, or the like, but is made of a material harder than the airbag cushion 252 and has high rigidity. For example, the inclined part 255 has strength characteristics similar to those of an iron plate. The inclined part 255 has sufficient rigidity to resist deformation even when subjected to a force from the airbag cushion 252 while expanding and deploying or having already expanded and deployed.

The inclined part 255 may be configured as part of the seat pan 24. In other embodiments, the inclined part 255 may be separate from the seat pan 24 (see FIG. 6). If separate, the inclined part 255 may be a plate fixedly or movably attached to the seat pan 24. In still another embodiment, the inclined part 255 does not need to be attached to a structure of the vehicle seat 100 (for example, a seating frame 20 or a seat pan 24).

In the aspect depicted in FIG. 5, in which the inclined part 255 is configured as part of the seat pan 24, the seat pan 24 can be considered to be at an angle. This angle is larger than the angle of a conventional seat pan. Specifically, the angle of inclination relative to the horizontal plane is greater than that of a conventional seat pan, which is flat or has a low angle, by, for example, about 5 to 15 degrees, and preferably about 10 to 15 degrees. By setting such an angle range, seating comfort of the vehicle seat during normal conditions and a reduction in an amount of waist movement of the occupant P, improvement in restraint performance, and reduction in chest deflection during a vehicle emergency are easily achieved together. In this case, the thickness of the seat pan 24 is set to be 0.7 mm or more and 1.4 mm or less.

The inclined part 255 and the airbag cushion 252 are disposed on the rear side of the seat cushion 2 in the front-to-back direction. In relation to the occupant P, the highest point of the inclined part 255 and the airbag cushion 252 is forward of the occupant P's ischial bones and closer to the occupant P's waist. This position can be, for example, about 50 to 100 mm further rearward than the conventional arrangement position. By setting the position in this manner, in the event of a vehicle emergency, the initial restraint can be accelerated and a ride-down effect can be obtained. In other words, since initial load input to a waist of the occupant P is advanced in timing, a ride-down effect is easily obtained, and rebound of the waist can be accelerated.

Furthermore, the inclined part 255 and the airbag cushion 252 are disposed at a relatively high position inside the seat cushion 2 in the vertical direction. This arrangement position should preferably be closer to the waist, taking into consideration the reaction force and comfort of sitting. This improves the initial restraint performance in the event of a vehicle emergency, keeps the height of the occupant P's waist, and suppresses the amount of movement of the upper torso, which is effective in reducing the amount of chest deflection.

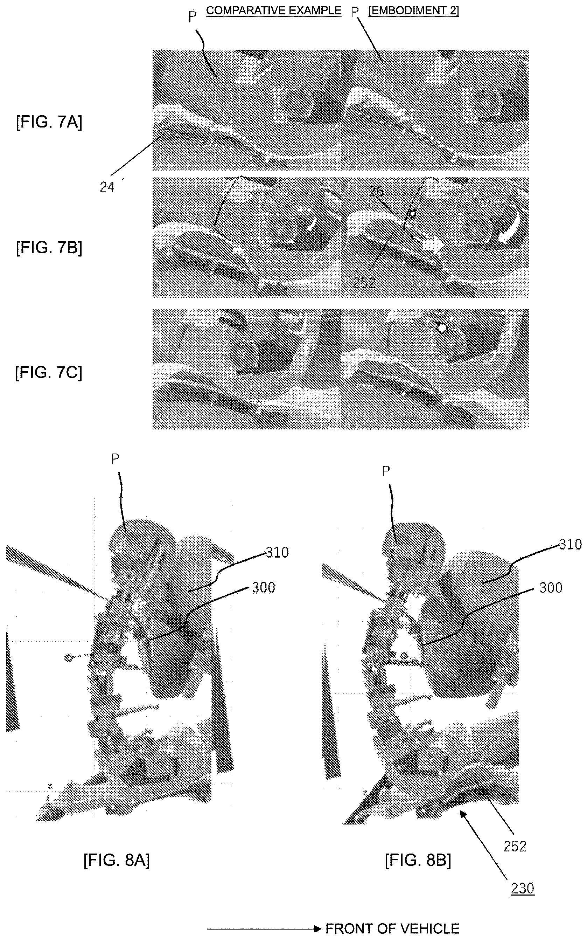

FIG. 7 is a diagram depicting the arrangement and operation of the occupant protection device 230 in relation to the occupant P. (a) depicts normal time, (b) depicts the middle stage of a vehicle emergency, and (c) depicts the later stage of a vehicle emergency. In addition, in FIG. 7, the left side depicts a comparative example, and the right side depicts Embodiment 2. The comparative example uses a conventional seat pan 24', which has a lower angle than the seat pan 24 (inclined part 255) according to Embodiment 2.

In FIG. 7(a), an occupant P is seated on the seat cushion 2 in a normal posture and has a seat belt (not depicted) fastened. In the event of a vehicle emergency, first, the inflator 254 instantly supplies gas to the airbag cushion 252. Then, the airbag cushion 252 starts to expand and deploy, and expands and deploys obliquely rearward with the inclined part 255 serving as a reaction surface.

As depicted in FIG. 7(b), in the middle stage of a vehicle emergency, the expanding and deploying airbag cushion 252 pushes the seat surface 26 obliquely rearward. In relation to the occupant P, the airbag cushion 252 raises the vicinity of the thighs of the occupant P near the buttocks via the seat surface 26. This causes a force to act on the pelvis of the occupant P in a clockwise direction (backward rotation of the waist). As depicted in FIG. 7(c), the lifting force and rotational force are greater than those of the comparative example. This reduces forward movement of the waist and chest of the occupant P in the later stages of a vehicle emergency.

As described above, according to the occupant protection device 230 of Embodiment 2, since the inclined part 255 is disposed on a relatively rearward side of the seat cushion 2, the airbag cushion 252 that expands and deploys using the inclined part 255 as a reaction surface is able to push up, in a obliquely rearward direction, a vicinity of thighs close to buttocks of the occupant P (assuming that the occupant P is seated on the seat cushion in a normal posture and has the seat belt fastened). This allows a rotational force to be applied to the pelvis of the occupant P in the clockwise direction. Therefore, forward movement of the waist part of the occupant P can be reduced, and the occurrence of the submarine phenomenon can be suppressed, thereby improving the waist part restraint performance of the occupant.

In particular, the occupant protection device 230 is able to reduce chest deflection of an occupant by mounting an airbag cushion 252 that can be expanded and deployed on a seat pan 24 having a greater inclination than in a conventional configuration and by causing the waist of the occupant to bend rearward during airbag expansion and deployment.

FIG. 8 is a diagram for describing the effect of Embodiment 2 from another perspective, where (a) depicts a comparative example and (b) depicts Embodiment 2. The comparative example does not include the occupant protection device 230. Compared to the comparative example, Embodiment 2 has the following effects.

In other words, when the in-seat airbag cushion 252 deploys to restrain the occupant P's waist part, a force acts to push the waist portion and the entire spine connected thereto upward. As a result, the spine behind the sternum of the occupant P moves upward while remaining stationary in the front-to-back direction of the vehicle. Since this is a movement that occurs during a frontal collision, a force is applied to the occupant P that moves him/her relatively forward, but as a result of the deployment of this in-seat airbag cushion 252, a force is applied that moves the occupant P's waist to spine upward, as described above, and as a result, the occupant P's sternum moves in a direction downward and forward of the occupant P. At this time, the occupant P's sternum falls forward and diagonally downward, which prevents the distance between the sternum and the seat belt 300 and airbag cushion 310 from decreasing in the direction of movement of the tip end portion of the sternum (in other words, increases the gap), and as a result, chest deflection due to the force received by the occupant P from the seat belt 300 and airbag cushion 310 can be suppressed.

Next, some other aspects of Embodiment 2 will be described.

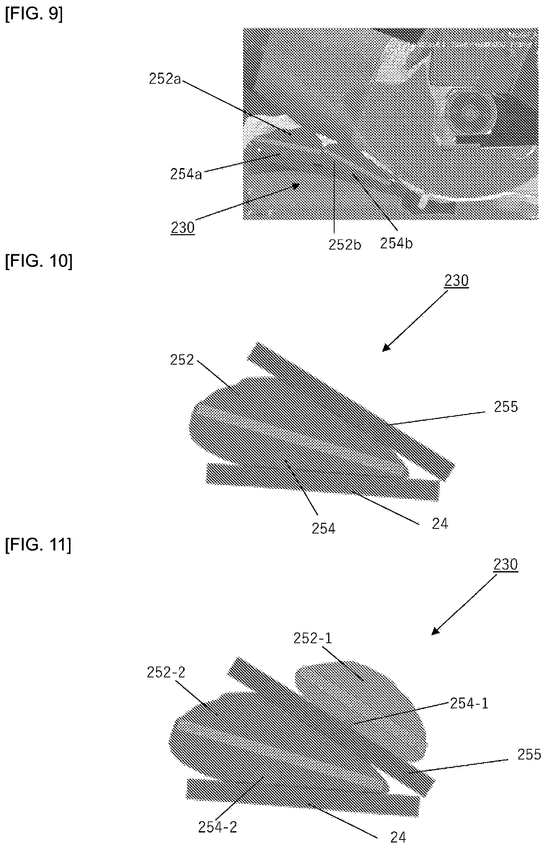

As depicted in FIG. 9, in another embodiment, a plurality of airbag cushions may be provided in the front-to-back direction. For example, the airbag cushion includes a front airbag cushion 252a and a rear airbag cushion 252b. Correspondingly, inflators 254a, 254b are also provided separately, and the front airbag cushion 252a and the rear airbag cushion 252b are configured to be able to expand and deploy independently of each other. With this configuration, in the event of a vehicle emergency, restraint and waist rotation can be maintained with two pushes. In particular, in the later stage of restraint in the event of a vehicle emergency, forward bending of the waist and movement of the upper torso of the occupant P can be reduced.

As depicted in FIG. 10, the airbag cushion 252 may be arranged below the inclined part 255. In this case, the inclined part 255 is moved by the expanded and deployed airbag cushion 252 so that the inclination angle with respect to the horizontal plane increases, and the seat surface 26 of the seat cushion 2 is pushed up. The inclined part 255 can function in the same manner as the push-up member 40 of Embodiment 1. For example, the inclined part 255 is composed of a plate separate from the seat pan 24 and is rotatably supported on the seat pan 24. Note that the inclined part 255 may be formed from a material with higher rigidity than the seat pan 24.

As depicted in FIG. 11, the airbag cushion may be positioned both above and below the inclined part 255. Specifically, the airbag cushion includes an upper airbag cushion 252-1 disposed above the inclined part 255 and a lower airbag cushion 252-2 disposed below the inclined part 255. The upper airbag cushion 252-1 is configured to expand and deploy using the inclined part 255 as a reaction surface to push up the seat surface 26. The lower airbag cushion 252-2 is configured so that the inclined part 255 is movable by expansion and deployment so that the inclination angle increases with respect to the horizontal plane. In other words, the aspect depicted in FIG. 11 corresponds to a combination of the aspect depicted in FIG. 6 and the aspect depicted in FIG. 10.

The upper airbag cushion 252-1 and the lower airbag cushion 252-2 are configured to be able to expand and deploy independently of each other. Therefore, the upper airbag cushion 252-1 and the lower airbag cushion 252-2 are supplied with expansion gas by inflators 254-1 and 254-2 provided individually corresponding thereto. By providing the upper airbag cushion 252-1 in addition to the lower airbag cushion 252-2, the occupant's waist can be further caused to rotate backward in the event of a vehicle emergency.

The above-described Embodiment 2 and implementations thereof are intended to facilitate understanding of the present invention, and are not intended to be construed as limiting the present invention. Elements included in Embodiment 2, as well as arrangements, materials, conditions, shapes, sizes, and the like thereof, are not limited to those exemplified, but rather can be appropriately changed.

### [Embodiment 3]

Conventional occupant protection devices also have other problems, separate or related to those mentioned above. Specifically, conventionally, depending on the form of the seat pan, the expanded and deployed airbag cushion could cause the seat pan to deform significantly. In such a case, the airbag cushion that receives a reaction force from the seat pan during expansion and deployment may fail to exhibit the originally intended deployment behavior due to large deformation of the seat pan. As a result, the airbag cushion may not push up the seat surface sufficiently, which may reduce the restraint performance on the pelvis and waist part of the occupant.

To solve this problem, the occupant protection device according to Embodiment 3 employs an approach different from that of the occupant protection devices according to Embodiments 1 and 2. In other words, the occupant protection device according to Embodiment 3 is an occupant protection device that is provided inside or below the seat cushion of a vehicle seat, and at least a spring is disposed inside the seat cushion. The occupant protection device includes a bridge member extending in the seat width direction at least in the front portion of the spring so as to bridge a pair of side frames arranged within the seat cushion or vehicle body structural portions on both sides in the seat width direction outside the seat cushion, a recess part provided in the rear portion of the bridge member, an airbag cushion that can be expanded and deployed provided in a folded state, and an inflator that supplies gas for expansion and deployment into the internal space of the airbag cushion in the event of a vehicle emergency. The inflator is provided in the recess part, and the airbag cushion, in a folded state, has a stowing portion provided in the recess part and a main expansion portion disposed outside the recess part and extending to the rear of the seat cushion, and the main expansion portion is configured to expand and deploy from the upper part of the bridge member toward the rear of the seat and push up the seat surface of the seat cushion.

Here, the term "bridge member" refers to a member that extends in a seat width direction at least at a front portion with respect to the spring, and the bridge member itself may overlap the spring or may be positioned forward of a front end of the spring without overlapping the spring. Furthermore, the bridge member may extend in the seat width direction so as to bridge a pair of side frames or vehicle body structural portions, and is typically a seat pan, but may also be other well-known members such as a submarine bar or submarine beam.

The "side frame" is a part of the seating frame that is disposed within the seat cushion. In the case of a vehicle seat in which a side frame is not disposed within the seat cushion, the bridge member bridges over the "vehicle body structural portion". A seat structure in which a side frame is not disposed within the seat cushion is typically a vehicle seat for a small truck such as those classified as a mini truck. This vehicle seat is attached directly to the vehicle body by being bolted to mounting holes formed in the vehicle body. In this case, the vehicle body structural portions on both the left and right sides of the vehicle seat can be, for example, part of the chassis on the outside in the vehicle width direction, or part of a bar extending in the front-to-back direction on the inside in the vehicle width direction.

The "rear portion of the bridge member" where the "recess part" is provided may be the rear part of the bridge member or the rear-end part of the bridge member. In addition, the position may be further rearward of the rear-end part of the bridge member, but in this case, the position is in the vicinity in the front-to-back direction of the rear-end part (a location not far away from the rear-end part).

The "recess part" may be provided in a part of the bridge member, or may be provided in a member other than the bridge member (for example, a reinforcing beam). The "recess part" is a recessed portion in the upper surface of the pair of side frames or vehicle body structural portions that the bridge member bridges, and typically has an open upper side. For example, the "recess part" is demarcated by a bottom wall and vertical walls rising from the periphery thereof, and is open at the top. In another embodiment, the recess part may have a part of the vertical wall rising from the bottom wall missing, and may be open in a direction other than the upward direction. For example, the recess part may be demarcated by a bottom wall and a vertical wall that rises from a front edge of the bottom wall. In other words, the recess part may be formed by a member having a substantially L-shaped cross section.

In the following, a seat pan will be used as an example of the "bridge member". Also, an example will be described in which the "recess part" is provided in the reinforcing beam, and further, an example will be described in which the bridge member and the reinforcing beam are provided so as to bridge a pair of side frames.

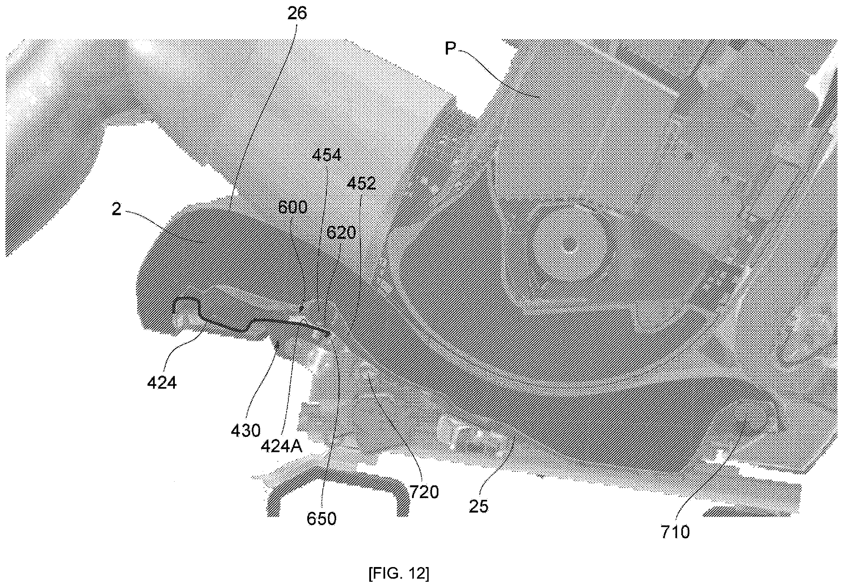

A specific example of the occupant protection device according to Embodiment 3 will be described below with reference to FIGS. 12 to 18. However, for structural elements in Embodiment 1, the description will be omitted and the same or similar structural element codes will be used.

As depicted in FIG. 12, an occupant protection device 430 includes a seat pan 424 (bridge member), a reinforcing beam 600, an airbag cushion 452 and an inflator 454.

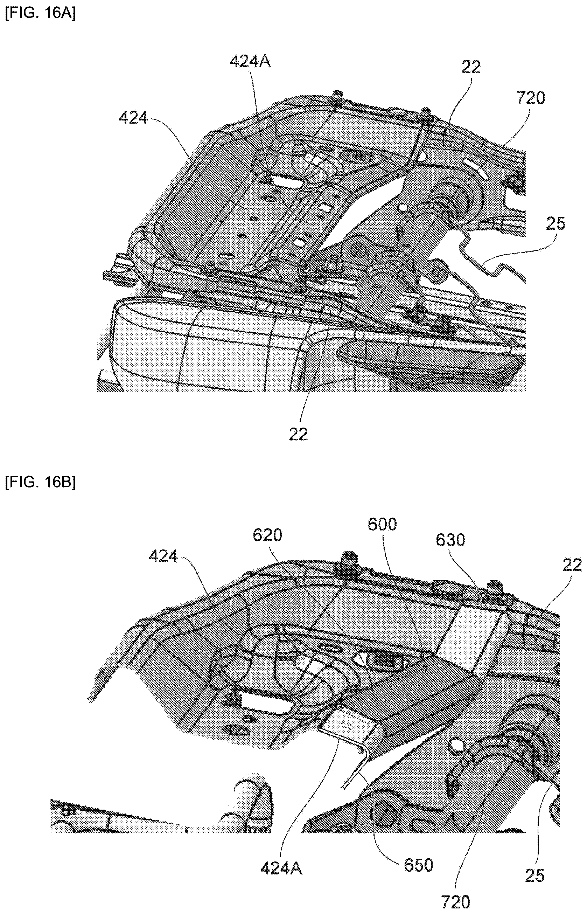

The seat pan 424 is positioned below the front part of the seat cushion 2 and extends in the seat width direction so as to bridge a pair of side frames 22, 22 arranged within the seat cushion 2 (see FIGS. 1B and 16A). Here, the seat pan 424 is constructed between the front parts of the pair of side frames 22, 22, and is bolted to the upper surfaces of the pair of side frames 22, 22 at a plurality of locations (two locations) on both the left and right sides (see FIG. 16A). The seat pan 424 is made by processing a plate made of, for example, iron or steel.

The seat pan 424 is positioned at least at a front portion with respect to the spring 25 (see FIGS. 1B and 16A). The spring 25 provides cushioning to the seat cushion 2 and is curved, for example, in a wave shape. A plurality of springs 25 are provided in the seat width direction, and each extends in the front-to-back direction.

A first end (rear end) of the spring 25 is engaged with a connecting bar 710 that connects the rear parts of the pair of side frames 22, 22. A second end (front end) of the spring 25 is engaged with a submarine bar 720. The submarine bar 720 is intended to suppress the submarine phenomenon, and extends in the seat width direction so as to bridge the pair of side frames 22, 22. Here, the submarine bar 720 is located rearward of the seat pan 424. Therefore, the seat pan 424 is located forward of the spring 25.

In another embodiment, the front end of the spring 25 may be connected to the rear part of the seat pan 424 or to the reinforcing beam 600. In addition, the front end of the spring 25 may overlap the rear part of the seat pan 424. In either case, the seat pan 424 only needs to be positioned at least in the forward portion relative to the spring 25.

The reinforcing beam 600 is provided at the rear portion of the seat pan 424. The reinforcing beam 600 extends in the seat width direction and is supported by a pair of side frames 22, 22 (see FIG. 16B).

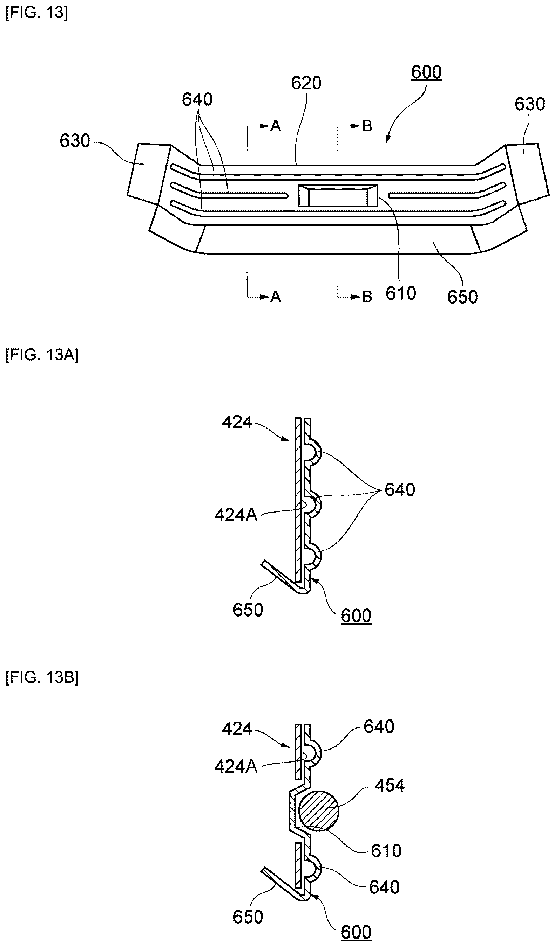

As depicted in FIGS. 13, 13A, and 13B, the reinforcing beam 600 has a main body part 620 in which a recess part 610 is formed, and a pair of support receiving parts 630, 630 provided on both ends of the main body part 620. The reinforcing beam 600 is produced by processing a plate made of, for example, iron or steel. The material of the reinforcing beam 600 is the same as the material of the seat pan 424, but may be different.

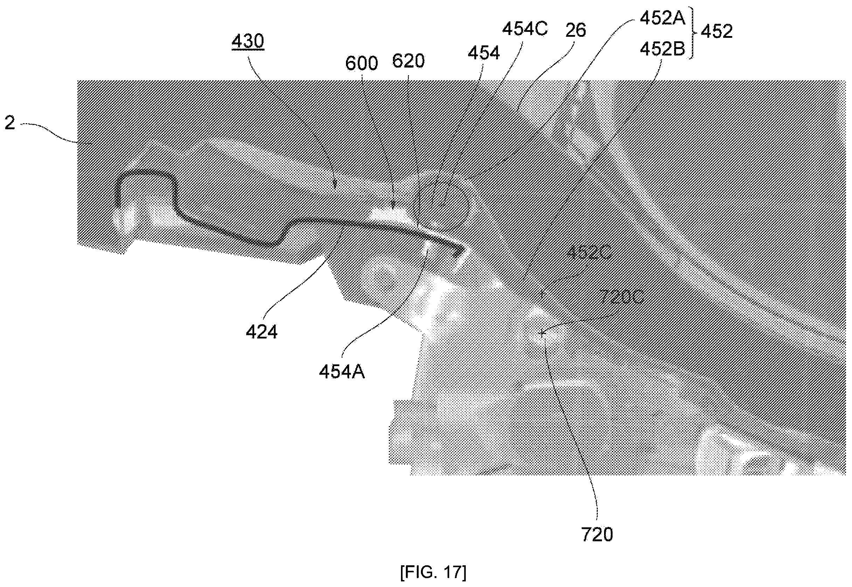

The recess part 610 is formed in the center of the main body part 620 in the longitudinal direction (seat width direction). The inflator 454 is provided in the recess part 610. Here, the inflator 454 is stowed in the recess part 610. In addition, as will be described later, the inflator 454 is accommodated inside the stowing portion 452A of the folded airbag cushion 452 (see FIG. 17), and the stowing portion 452A that accommodates the inflator 454 is stowed in the recess part 610.

The main body part 620 is provided with a plurality of beads 640. The beads 640 are formed as horizontal beads extending in the seat width direction. Here, the beads 640 are formed one in front of and one behind the recess part 610, and one on each side of the recess part 610. The beads 640 protrude on the opposite side from the recess part 610. In other words, the recess part 610 is formed so that the upper surface of the main body part 620 is formed to recess downward, whereas the beads 640 are formed so that the upper surface of the main body part 620 is raised upward (see FIG. 13B).

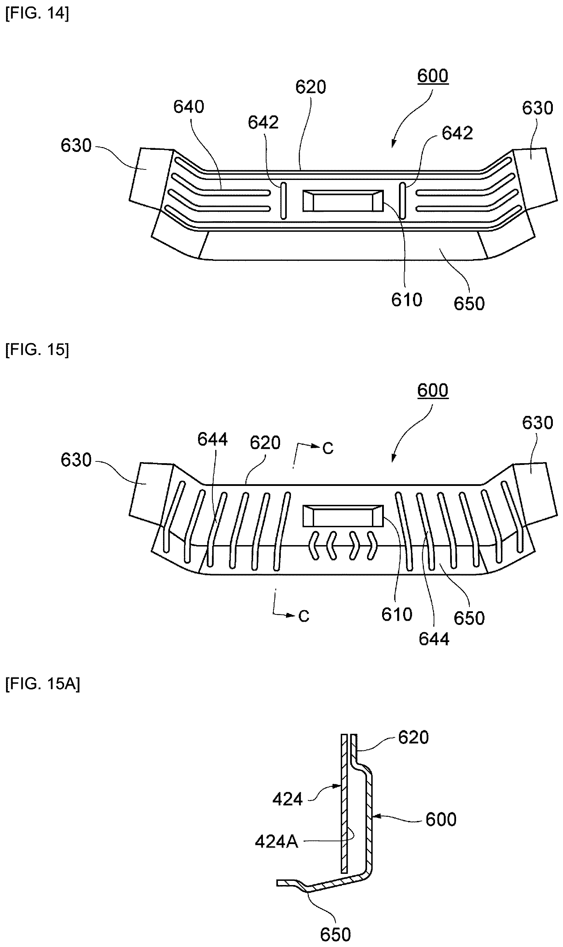

In another embodiment, as depicted in FIG. 14, the main body part 620 may be provided with beads 642 that extend in a different direction from the beads 640. Here, the beads 642 are formed as vertical beads extending in the front-to-back direction, one on each side to the left and right of the recess part 610.

As depicted in FIG. 12, the main body part 620 is disposed so as to be inclined upward toward the front. Therefore, the upper surface of the main body part 620 is inclined obliquely backward. The airbag cushion 452 is expanded and deployed obliquely rearward, with the inclined upper surface of the main body part 620 serving as a reaction surface.

The reinforcing beam 600 further includes a flange 650 extending downward from the rear end of the main body part 620. The flange 650 is inclined forward toward the lower end. The flange 650 may also be provided with beads. For example, as depicted in FIGS. 15 and 15A, a plurality of beads 644 may be provided across both the main body part 620 and the flange 650. Here, the beads 644 are formed as vertical beads extending in the front-to-back direction.

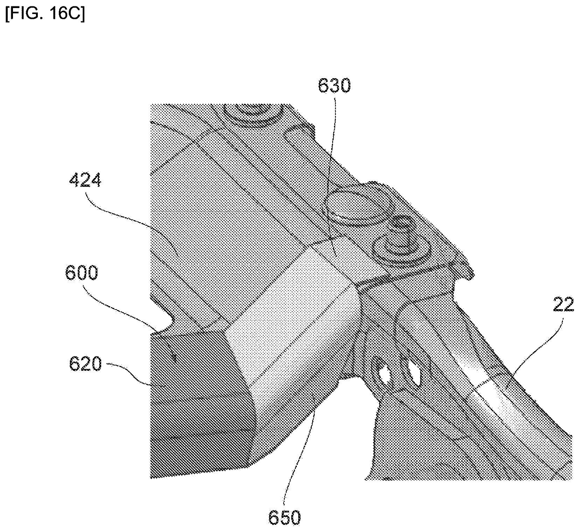

The support receiving parts 630, 630 are formed so as to protrude from both ends of the main body part 620 in the seat width direction. As depicted in FIGS. 16B and 16C, the support receiving parts 630, 630 are supported by the side frames 22, 22, respectively. The support receiving parts 630, 630 may be supported by the side frames 22, 22 via the seat pan 424, or may be supported by the side frames 22, 22 without the seat pan 424 being interposed therebetween. The support receiving parts 630, 630 may be supported by being placed on the side frames 22, 22 either via the seat pan 424 or directly, and may be secured by welding or bolting or the like.

The reinforcing beam 600 has a portion that overlaps the upper part of the seat pan 424 at the rear portion of the seat pan 424 (see FIGS. 12, 13A, 13B, 15A, 16A, 16B). Here, the main body part 620 and the support receiving parts 630, 630 of the reinforcing beam 600 are portions that overlap the rear upper part 424A of the seat pan 424. Furthermore, the thickness of the reinforcing beam 600 is thinner than the thickness of the seat pan 424.

The inflator 454 is similar to the inflator 54 of Embodiment 1. For example, the inflator 454 has an ignition device at the open end of a bottomed cylindrical body, and generates gas by igniting a gas generating agent inside the cylindrical body in the event of a vehicle emergency, and supplies gas for expansion and deployment to the internal space of the airbag cushion 452 from a plurality of outlets on the circumferential surface of the cylindrical body.

The airbag cushion 452 is similar to the airbag cushion 52 of Embodiment 1, but is different in terms of arrangement and the like. The airbag cushion 452 is a bag body that receives gas from the inflator 454 and expands and deploys so as to push up the seat surface 26 of the seat cushion 2. The airbag cushion 452 is formed, for example, by joining (sewing or adhering) a plurality of pieces of base fabric made of a non-woven fabric or the like at appropriate positions.

The airbag cushion 452 is provided in a folded state as depicted in FIG. 17. The folding manner is arbitrary, and may be, for example, an accordion-like shape, a roll-like shape, or a combination thereof. In the folded state, the airbag cushion 452 has a stowing portion 452A provided in the recess part 610 and a main expansion portion 452B arranged outside the recess part 610 and extending toward the rear of the seat cushion 2.

The stowing portion 452A accommodates an inflator 454 therein. The stowing portion 452A and the inflator 454 are fastened together to the seat pan 424 or the reinforcing beam 600. For example, when the above-described bottomed cylindrical body is used as the inflator 454, the cylindrical body is accommodated inside the stowing portion 452A with the axis thereof aligned with the seat width direction, and is stowed in the recess part 610. Furthermore, a stud bolt 454a protruding from the outer periphery of the cylindrical body is caused to protrude outside the stowing portion 452A, and is inserted through the recess part 610 and the seat pan 424, and fastened and secured to the seat pan 424 with a nut (not depicted). In this manner, the inflator 454 and the stowing portion 452A of the airbag cushion 452 are fastened together to the seat pan 424 by the stud bolt 454a and a nut.

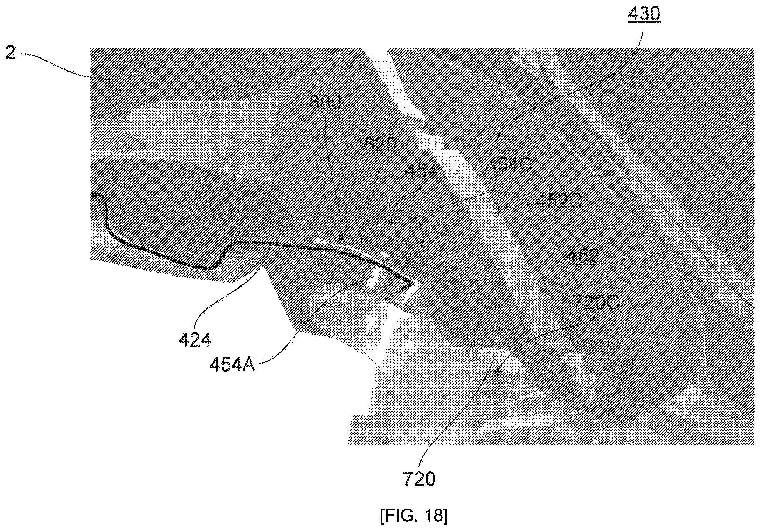

The main expansion portion 452B may correspond to the portion of the folded airbag cushion 452 excluding the stowing portion 452A. The interior of the main expansion portion 452B is in communication with the interior of the stowing portion 452A and receives gas supplied from the inflator 454. As a result, the main expansion portion 452B expands and deploys. As depicted in FIG. 18, the main expansion portion 452B is expanded and deployed generally from the upper part of the seat pan 424 toward the rear of the seat, and the expanding and deploying main expansion portion 452B pushes up the seat surface of the seat cushion 2. As described above, the main expansion portion 452B expands and deploys so as to push up the seat surface of the seat cushion 2 obliquely rearward, with the upper surface of the main body part 620, which is inclined obliquely downward and rearward, serving as a reaction surface.

As depicted in FIG. 18, a center position 452C of the expanded and deployed airbag cushion 452 is positioned rearward of an installation position 454C of the inflator 454. The center position 452C of the airbag cushion 452 is the vertical center position (position between the upper end and the lower end) of the expanded and deployed airbag cushion 452, and is also the front-to-back direction center position (position between the front end and the rear end) of the expanded and deployed airbag cushion 452. The installation position 454C of the inflator 454 is positioned, for example, on the axis of the bottomed cylindrical body of the inflator 454 fixed in the recess part 610. The center position 452C of the airbag cushion 452 is positioned approximately directly above a center position 720C of the submarine bar 720.

Note that even in the folded state before expansion and deployment, the center position 452C of the airbag cushion 452 is positioned rearward of the installation position 454C of the inflator 454, and is positioned approximately directly above the center position 720C of the submarine bar 720 (see FIG. 17).

As described above, the occupant protection device 430 of Embodiment 3 includes a seat pan 424 (bridge member) that extends in the seat width direction so as to bridge the pair of side frames 22, 22 at least in the forward portion relative to the spring 25, a recess part 610 provided in the rear portion of the seat pan 424, an airbag cushion 452 that is provided in a folded state and can be expanded and deployed, and an inflator 454 that supplies gas for expansion and deployment to the internal space of the airbag cushion 452 in the event of a vehicular emergency. The inflator 454 is provided in the recess part 610, and the airbag cushion 452, when folded, has a stowing portion 452A provided in the recess part 610 and a main expansion portion 452B arranged outside the recess part 610 and extending to the rear of the seat cushion 2, and the main expansion portion 452B is configured to expand and deploy from the upper part of the seat pan 424 toward the rear of the seat and push up the seat surface 26 of the seat cushion 2.

In particular, the occupant protection device 430 further includes a reinforcing beam 600 at the rear portion of the seat pan 424, extending in the seat width direction and supported by the pair of side frames 22, 22, and the recess part 610 is provided in the reinforcing beam 600.

With this configuration, significant deformation of the seat pan 424 by the expanded and deployed airbag cushion 452 can be suppressed. In particular, the reinforcing beam 600 allows the load from the expanded airbag cushion 452 to be input to the recess part 610 of the reinforcing beam 600; however, this input load can be distributed to the pair of side frames 22, 22 via the reinforcing beam 600. This suppresses deformation of the seat pan 424. The main expansion portion 452B of the airbag cushion 452 can expand and deploy from the upper part of the seat pan 424 toward the rear of the seat, pushing up the seat surface 26 of the seat cushion 2, thereby ensuring restraint performance of the pelvis and waist part of the occupant P. In addition, due to the configuration in which the inflator 454 is stowed in the recess part 610, seat comfort of the seat cushion 2 is not impaired.

In addition, in one aspect of Embodiment 3, the reinforcing beam 600 is provided with beads 640, 642, and 644. With this aspect, the rigidity of the reinforcing beam 600 itself can be increased.

Furthermore, in one aspect of embodiment 3, the reinforcing beam 600 has a main body part 620 that is inclined upward toward the front and has a recess part 610 formed therein, and a pair of support receiving parts 630, 630 that are provided at both ends of the main body part 620 and supported by a pair of side frames 22, 22. With this aspect, the inclination of the main body part 620 can be effectively utilized to push up the seat surface 26 obliquely upward and rearward with the main expansion portion 452B. Therefore, forward movement of the waist part of the occupant P can be reduced even further, and the occurrence of the submarine phenomenon can be suppressed, thereby improving the waist part restraint performance of the occupant.

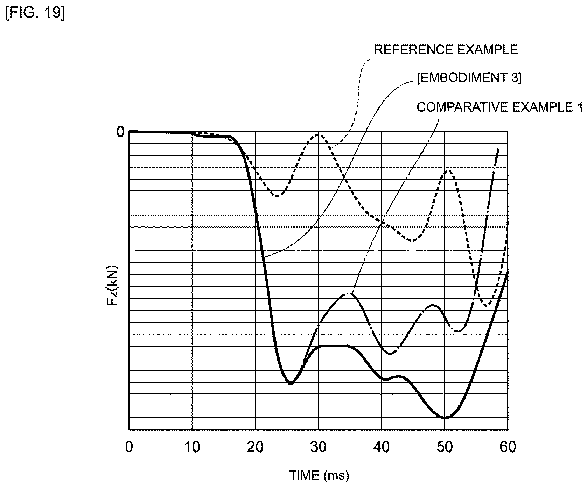

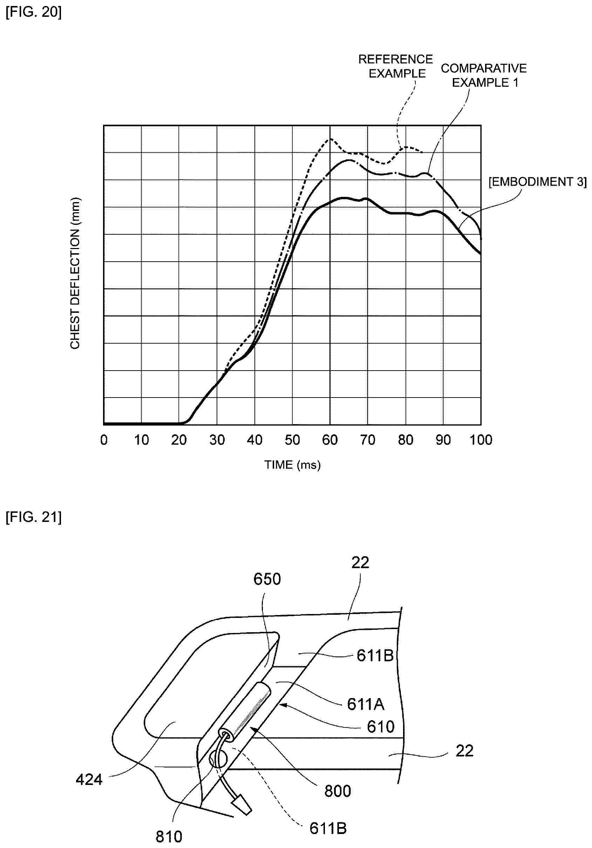

Next, the effects of the occupant protection device 430 will be described with reference to FIGS. 19 and 20.

FIG. 19 depicts the relationship between the reaction force (vertical axis) that an occupant receives from the seat pan during a vehicle emergency (when the airbag cushion is expanded and deployed) and the passage of time (horizontal axis). Due to this being a reaction force, the vector direction is reversed, and therefore the vertical axis is in the negative direction starting from 0. The reference example is an example in which the airbag cushion 452 is omitted from Embodiment 3. Comparative Example 1 is an example in which the reinforcing beam 600 is omitted from Embodiment 3, and the inflator 454 is provided on the seat pan 424. As can be seen from FIG. 19, in Embodiment 3, the reaction force that the occupant receives from the seat pan 424 is smaller than that in Comparative Example 1 from the initial stage of expansion and deployment (30 ms). This means that the input load to the seat pan 424 is reduced. Therefore, in the comparative example 1, the seat pan may be deformed, whereas in Embodiment 3, deformation of the seat pan 424 can be suppressed.

FIG. 20 depicts the force (force from the seat belt) that an occupant's chest receives in a vehicle emergency (when the airbag cushion is expanded and deployed) as a value of chest deflection, and depicts the relationship between chest deflection (vertical axis) and the passage of time (horizontal axis). The smaller the chest deflection value, the less damage to the occupant. The reference example and Comparative Example 1 are examples similar to the case of FIG. 19. As depicted in FIG. 20, in Embodiment 3, the chest deflection value is smaller than that of Comparative Example 1.

The above-described Embodiment 3 and implementations thereof are intended to facilitate understanding of the present invention, and are not intended to be construed as limiting the present invention. Elements included in Embodiment 3, as well as arrangements, materials, conditions, shapes, sizes, and the like thereof, are not limited to those exemplified, but rather can be appropriately changed.

For example, in the embodiment described above, the seat pan 424 and the reinforcing beam 600 with the recess part 610 are separate bodies, but they may also be formed as an integrated structure. This integrally structured member may be adapted to receive an input load of, for example, 5 kN or more via the expanded and deployed airbag cushion 452. In this case, the submarine bar 720 may be omitted. FIG. 21 is a partially enlarged perspective view depicting an example in which such an integrally structured member is used. As depicted in FIG. 21, a hole 810 is formed in a bridge portion 800 (part of the seat pan 424), and the harness for the inflator 454 passes through the hole 810 and extends below the seat. This keeps the harness length short.

The recess part 610 and flange part 650 [sic] formed in the reinforcing beam 600 in the embodiment described above are formed in the rear portion of the seat pan 424 in the aspect depicted in FIG. 21. The recess part 610A is indented relative to the upper surfaces of the side frames 22, 22, and may be demarcated by a bottom wall 611A and left and right side walls 611B, 611B. The side walls 611B, 611B rise from both ends of the bottom wall 611A in the seat width direction and are supported by a pair of side frames 22, 22. An inflator 454 is provided on the bottom wall 611A. The flange 650 is formed to rise from the front end of the bottom wall 611A.

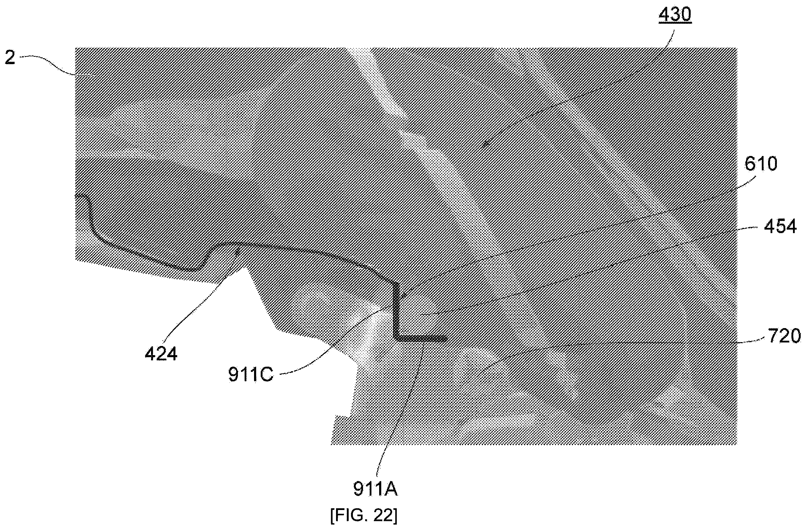

FIG. 22 is a partially enlarged view according to an example in which the modified example of FIG. 21 is further modified. The seat pan 424 has a recess part 610B demarcated by a bottom wall 911A and a vertical wall 911C. The recess part 610B is a member having a substantially L-shaped cross section, and the vertical wall 911C is a portion corresponding to the flange 650.

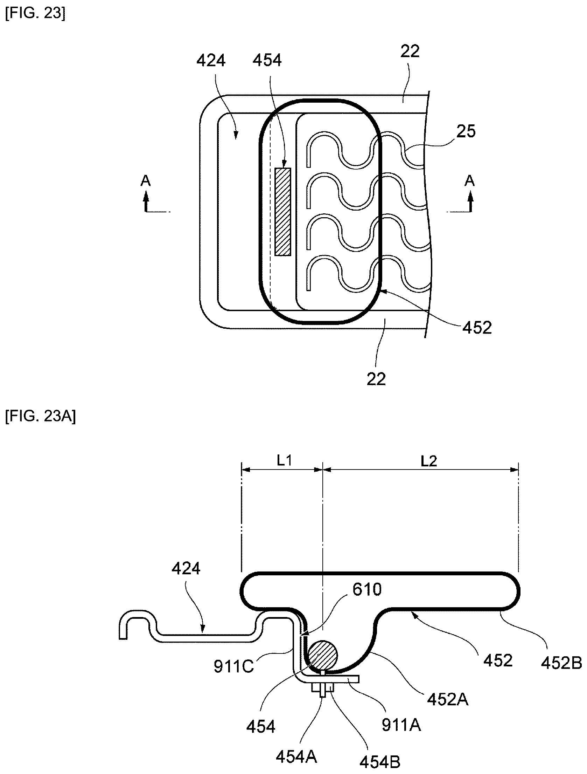

FIGS. 23 and 23A depict the relationship between the folded airbag cushion 452 and the seat pan 424, and the like before expansion and deployment in a modified example of Embodiment 3. Note that the recess part 610 and flange part 650 formed in the reinforcing beam 600 in the embodiment described above are formed in the rear portion of the seat pan 424 here.

A stowing portion 452A for the inflator 454 and the airbag cushion 452 is secured to the rear portion (rear-end part in this example) of the seat pan 424 with a bolt 454A and a nut 454B. With respect to this securing location, the main expansion portion 452B of the airbag cushion 452 is arranged widely above the spring 25 to the rear of the seat. In this case, the main expansion portion 452B of the airbag cushion 452 is disposed relative to the securing location in a balance of L1:L2=1:9. Alternatively, they are arranged in a balance of L1:L2=2:8. L1 represents the distance from the securing location to the front end of the main expansion portion 452B, and L2 represents the distance from the securing location to the rear end of the main expansion portion 452B. The main expansion portion 452B of the airbag cushion 452 is extended rearward so that the bottom wall 911A or the vertical wall 911C (flange part) can withstand a load of at least 5 kN (input load on the occupant's waist part) when the airbag cushion 452 is fully expanded and deployed.

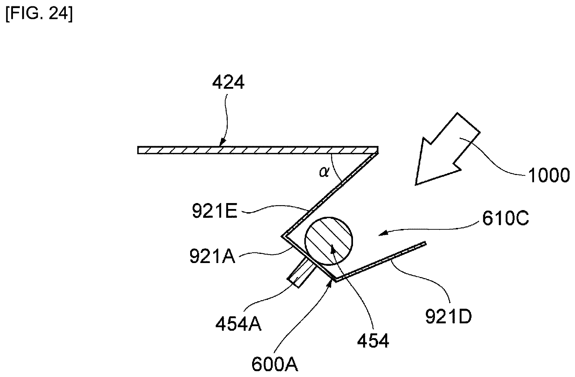

FIG. 24 depicts another modified example of Embodiment 3. A recess part 610C is provided at the rear-end part of the seat pan 424. The recess part 610C is demarcated by a bottom wall 921A, a vertical wall 921D, and a vertical wall 921E. The vertical wall 921E rises from the front end of the bottom wall 921A and connects to the rear end of the seat pan 424. In this case, the vertical wall 921E is provided so as to form an acute angle with respect to the horizontal direction of the seat or the seat pan 424 (α<90 degrees). The angle α is, for example, 25 to 45 degrees. The vertical wall 921D rises from the rear end of the bottom wall 921A, and the tip end thereof is a free end. The vertical wall 921D faces the vertical wall 921E. Vertical wall 921D may be parallel to vertical wall 921E or may be at a slight angle relative to vertical wall 921E. Reference numeral 1000 denotes the direction in which the waist part of the occupant moves, and this direction is substantially parallel to the vertical walls 921D and 921E.

The recess part 610C may be formed in a reinforcing beam 600A. In another embodiment, some or all of the walls forming recess part 610C may be integral with seat pan 424. For example, the vertical wall 921E may be formed integrally with the seat pan 424 and extend obliquely downward and forward from the rear end of the seat pan 424.

### <Additional Considerations for Various Aspects>

### [Embodiment A-1]

An occupant protection device provided inside or below a seat cushion of a vehicle seat, the occupant protection device comprising:
a push-up member that is pivotable so as to push up a seat surface of the seat cushion; and
a drive device that applies, during a vehicle emergency, a force that causes the push-up member to pivot, wherein
the push-up member includes a front part located forward of a pivot center in the front-to-back direction of the vehicle seat, and
the drive device is disposed, of a space between the front part of the push-up member and the pivot center, below the front part of the push-up member, and is configured to apply the force to the front part of the push-up member.

### [Embodiment A-2]

The occupant protection device according to Embodiment A-1, wherein the drive device includes:
an airbag cushion that is expandable and deployable; and
an inflator that supplies gas for expansion and deployment into an internal space of the airbag cushion during a vehicle emergency, and
the airbag cushion is configured to start expansion and deployment below the front part of the push-up member and to apply the force to the front part of the push-up member.

### [Embodiment A-3]

The occupant protection device according to Embodiment A-1 or A-2, wherein the airbag cushion is configured to not contact the rear part of the push-up member when expanded and deployed.

### [Embodiment A-4]

The occupant protection device according to Embodiment A-2 or A-3, wherein the airbag cushion is disposed on a mounting surface of a seat pan and configured to expand and deploy upward with the mounting surface serving as a reaction force surface.

### [Embodiment A-5]

The occupant protection device according to Embodiment A-4, wherein the mounting surface is a flat surface.

### [Embodiment A-6]

The occupant protection device according to Embodiment A-4 or A-5, wherein the front part of the push-up member extends parallel to the mounting surface.

### [Embodiment A-7]

The occupant protection device according to any one of Embodiments A-4 to A-6, wherein the push-up member is bent once between the front part and the pivot center, and a portion from the bent location to a front end of the front part extends parallel to the mounting surface.

### [Embodiment A-8]

The occupant protection device according to Embodiment A-7, wherein the push-up member is inclined upward and forward in the front-to-back direction of the vehicle seat from the pivot center to the bent location.

### [Embodiment A-9]

The occupant protection device according to embodiment A-8, wherein the portion of the push-up member from the front end of the front part to the bent location is longer than the portion from the bent location to the pivot center.

### [Embodiment A-10]

The occupant protection device according to any one of Embodiments A-4 to A-9, wherein
the seat pan has a front wall that extends upward from a front end of the mounting surface, and
the push-up member is provided at a position lower than an upper end of the front wall.

### [Embodiment A-11]

The occupant protection device according to any one of Embodiments A-2 to A-10, wherein the airbag cushion is configured to be guided to expand and deploy upward with a front wall of a seat pan serving as a reaction surface.

### [Embodiment A-12]

The occupant protection device according to any one of Embodiments A-4 to A-11, wherein the inflator is secured to the seat pan via a bolt inserted from the mounting surface side.

### [Embodiment A-13]

The occupant protection device according to Embodiment A-1, wherein the drive device includes:
a power source; and
a power transmission part that connects the power source and the push-up member and transmits power from the power source to the push-up member in order to apply the force to the front part of the push-up member.

### [Embodiment A-14]

The occupant protection device according to any one of Embodiments A-1 to A-6 or A-13, wherein the push-up member has a bent location above an imaginary line connecting a front end of the front part and the pivot center.

### [Embodiment B-1]

An occupant protection device provided inside or below a seat cushion of a vehicle seat, the occupant protection device comprising:
an airbag cushion that can be expanded and deployed;
an inflator that supplies gas for expansion and deployment into an internal space of the airbag cushion during a vehicle emergency; and
an inclined part that is disposed on a rearward side when the seat cushion is divided into front and rear portions at a central position in a front-to-back direction, the inclined part being inclined upward toward a front side, wherein
the airbag cushion is disposed on one or both of an upper side or a lower side of the inclined part, and
the airbag cushion and/or the inclined part is configured to push up a seating surface of the seat cushion in a diagonally rearward direction by expansion and deployment of the airbag cushion.

### [Embodiment B-2]

The occupant protection device according to Embodiment B-1, wherein the airbag cushion is disposed on an upper side of the inclined part and is configured to expand and deploy with the inclined part serving as a reaction surface so as to push up a seating surface of the seat cushion.

### [Embodiment B-3]

The occupant protection device according to Embodiment B-1, wherein the airbag cushion is disposed on a lower side of the inclined part, and
the inclined part is configured to be moved by the airbag cushion that has expanded and deployed such that an inclination angle of the inclined part with respect to a horizontal plane becomes larger, thereby pushing up a seat surface of the seat cushion.

### [Embodiment B-4]

The occupant protection device according to Embodiment B-1, wherein the airbag cushion includes an upper airbag cushion disposed on an upper side of the inclined part and a lower airbag cushion disposed on a lower side of the inclined part,
the upper airbag cushion is configured to expand and deploy with the inclined part serving as a reaction surface so as to push up a seat surface of the seat cushion, and
the lower airbag cushion is configured to move the inclined part by expansion and deployment such that an inclination angle of the inclined part increases with respect to a horizontal plane.

### [Embodiment B-5]

The occupant protection device according to any one of Embodiments B-1 to B-4, wherein the inclined part is part of a seat pan.

### [Embodiment B-6]

The occupant protection device according to any one of Embodiments B-1 to B-4, wherein the inclined part is a separate member from the seat pan and is configured as a plate attached to the seat pan.

### [Embodiment B-7]

The occupant protection device according to any one of Embodiments B-1 to B-6, wherein a plurality of the airbag cushions are provided in the front-to-back direction.

### [Embodiment B-8]

The occupant protection device according to any one of Embodiments B-1 to B-7, wherein, when an occupant is seated on the seat cushion in a normal posture and has a seat belt fastened, expansion and deployment of the airbag cushion promote rearward bending rotation of a waist of the occupant.

### [Embodiment C-1]

An occupant protection device provided inside or below a seat cushion of a vehicle seat, including a seat frame having a pair of side frames and a spring disposed inside the seat cushion, the occupant protection device comprising:
a bridge member that extends in a seat width direction so as to bridge, at least at a front portion of the spring, either a pair of side frames disposed inside the seat cushion or vehicle body structural portion located on both sides in the seat width direction outside the seat cushion;
a recess part provided in a rear portion of the bridge member;
an airbag cushion that is folded and is expandable and deployable; and
an inflator that supplies gas for expansion and deployment into an internal space of the airbag cushion during a vehicle emergency, wherein
the inflator is provided in the recess part,
the airbag cushion, in a folded state, includes a stowing portion provided in the recess part and a main expansion portion disposed outside the recess part and extending toward a rear of the seat cushion, and
the main expansion portion is configured to expand and deploy from an upper part of the bridge member toward a rear of the seat so as to push up a seat surface of the seat cushion.

### [Embodiment C-2]

The occupant protection device according to Embodiment C-1, further comprising:
a reinforcing beam that extends in a seat width direction at a rear portion of the bridge member and is supported by the pair of side frames or the vehicle body structural portion, wherein
the recess part is provided in the reinforcing beam.

### [Embodiment C-3]

The occupant protection device according to Embodiment C-2, wherein the reinforcing beam has a portion that overlaps an upper part of the bridge member.

### [Embodiment C-4]

The occupant protection device according to Embodiment C-2 or C-3, wherein
the bridge member is a seat pan, and
a plate thickness of the reinforcing beam is thinner than a plate thickness of the seat pan.

### [Embodiment C-5]

The occupant protection device according to Embodiment C-2 to C-4, wherein the reinforcing beam is provided with a bead.

### [Embodiment C-6]

The occupant protection device according to any one of Embodiments C-2 to C-5, wherein
the reinforcing beam includes:
a main body part that is inclined upward toward a front side and in which the recess part is formed; and
a pair of support receiving parts provided at both ends of the main body part and supported by the pair of side frames or the vehicle body structural portion.

### [Embodiment C-7]

The occupant protection device according to Embodiment C-6, wherein the reinforcing beam further includes a flange extending downwardly from the rear end of the main body part.

### [Embodiment C-8]

The occupant protection device according to any one of Embodiments C-1 to C-7, wherein the inflator is accommodated inside the stowing portion, and the stowing portion is stowed in the recess part.

### [Embodiment C-9]

The occupant protection device according to any one of Embodiments C-1 to C-8, wherein the recess part is positioned near a front end of the spring.

### DESCRIPTION OF CODES

1. Seatback, 2. Seat cushion, 3. Headrest, 4. Reclining mechanism, 10. Back frame, 20. Seat frame, 22. Side frame, 24, 24. Seat pan, 24a. Mounting surface, 24b. Front wall, 24c. Upper end, 25. Spring, 26. Seat surface, 30. Occupant protection device, 40. Push-up member, 41. Pivot center, 42. Front part, 42a. Front end, 43. Rear part, 44. Bent location, 45, 46. Portion, 50. Drive device, 52. Airbag cushion, 54. Inflator, 54a. Stud bolt, 54b. Nut, 72. Power source, 74. Power transmission part, 100. Vehicle seat, 230. Occupant protection device, 252, 252a, 252b, 252-1, 252-2. Airbag cushion, 254, 254a, 254b, 254-1, 254-2. Inflator, 255. Inclined part, 300. Seatbelt, 310. Airbag cushion for front airbag, 424. Seat pan, 424A. Rear upper part, 430. Occupant protection device, 452. Airbag cushion, 452A. Stowing portion, 452B. Main expansion portion, 452C. Center position, 454. Inflator, 454a. Stud bolt, 454B. Nut, 454C. Center position, 600. Reinforcing beam, 610, 610A, 610B, 610C. Recess part, 611A. Bottom wall, 611B. Side wall, 620. Main body part, 630. Support receiving part, 640, 642, 644, Bead, 650. Flange, 710. Connecting bar, 720. Submarine bar, 720C. Center position, 800. Bridge portion, 810. Hole, 911A. Bottom wall, 911C. Vertical wall, 921A. Bottom wall, 921D, 921E. Vertical wall, P. Occupant

## Claims

1. An occupant protection device provided inside or below a seat cushion of a vehicle seat, the occupant protection device comprising:
a push-up member that is pivotable so as to push up a seat surface of the seat cushion; and
a drive device that applies, during a vehicle emergency, a force that causes the push-up member to pivot, wherein
the push-up member includes a front part located forward of a pivot center in the front-to-back direction of the vehicle seat, and
the drive device is disposed, of a space between the front part of the push-up member and the pivot center, below the front part of the push-up member, and is configured to apply the force to the front part of the push-up member.

2. The occupant protection device according to claim 1, wherein
the drive device includes:
an airbag cushion that is expandable and deployable; and
an inflator that supplies gas for expansion and deployment into an internal space of the airbag cushion during a vehicle emergency, and
the airbag cushion is configured to start expansion and deployment below the front part of the push-up member and to apply the force to the front part of the push-up member.

3. The occupant protection device according to claim 2, wherein the airbag cushion is disposed on a mounting surface of a seat pan and configured to expand and deploy upward with the mounting surface serving as a reaction force surface.

4. The occupant protection device according to claim 2, wherein the airbag cushion is configured to be guided to expand and deploy upward with a front wall of a seat pan serving as a reaction surface.

5. The occupant protection device according to claim 3, wherein the push-up member is bent once between the front part and the pivot center, and a portion from the bent location to a front end of the front part extends parallel to the mounting surface.

6. The occupant protection device according to claim 1, wherein
the drive device includes:
a power source; and
a power transmission part that connects the power source and the push-up member and transmits power from the power source to the push-up member in order to apply the force to the front part of the push-up member.

7. The occupant protection device according to claim 1, 2, 3, 4, or 6, wherein the push-up member has a bent location above an imaginary line connecting a front end of the front part and the pivot center.

8. An occupant protection device provided inside or below a seat cushion of a vehicle seat, the occupant protection device comprising:
an airbag cushion that can be expanded and deployed;
an inflator that supplies gas for expansion and deployment into an internal space of the airbag cushion during a vehicle emergency; and
an inclined part that is disposed on a rearward side when the seat cushion is divided into front and rear portions at a central position in a front-to-back direction, the inclined part being inclined upward toward a front side, wherein
the airbag cushion is disposed on one or both of an upper side or a lower side of the inclined part, and
the airbag cushion and/or the inclined part is configured to push up a seating surface of the seat cushion in a diagonally rearward direction by expansion and deployment of the airbag cushion.

9. The occupant protection device according to claim 8, wherein the airbag cushion is disposed on an upper side of the inclined part and is configured to expand and deploy with the inclined part serving as a reaction surface so as to push up a seating surface of the seat cushion.

10. The occupant protection device according to claim 8, wherein
the airbag cushion is disposed on a lower side of the inclined part, and
the inclined part is configured to be moved by the airbag cushion that has expanded and deployed such that an inclination angle of the inclined part with respect to a horizontal plane becomes larger, thereby pushing up a seat surface of the seat cushion.

11. The occupant protection device according to claim 8, wherein
the airbag cushion includes an upper airbag cushion disposed on an upper side of the inclined part and a lower airbag cushion disposed on a lower side of the inclined part,
the upper airbag cushion is configured to expand and deploy with the inclined part serving as a reaction surface so as to push up a seat surface of the seat cushion, and
the lower airbag cushion is configured to move the inclined part by expansion and deployment such that an inclination angle of the inclined part increases with respect to a horizontal plane.

12. The occupant protection device according to any one of claims 8 to 11, wherein the inclined part is part of a seat pan.

13. The occupant protection device according to any one of claims 8 to 11, wherein the inclined part is a separate member from the seat pan and is configured as a plate attached to the seat pan.

14. The occupant protection device according to any one of claims 8 to 11, wherein a plurality of the airbag cushions are provided in the front-to-back direction.

15. The occupant protection device according to any one of claims 8 to 11, wherein, when an occupant is seated on the seat cushion in a normal posture and has a seat belt fastened, expansion and deployment of the airbag cushion promote rearward bending rotation of a waist of the occupant.

16. An occupant protection device provided inside or below a seat cushion of a vehicle seat, including at least a spring disposed inside the seat cushion, the occupant protection device comprising:
a bridge member that extends in a seat width direction so as to bridge, at least at a front portion of the spring, either a pair of side frames disposed inside the seat cushion or vehicle body structural portion located on both sides in the seat width direction outside the seat cushion;
a recess part provided in a rear portion of the bridge member;
an airbag cushion that is folded and is expandable and deployable; and
an inflator that supplies gas for expansion and deployment into an internal space of the airbag cushion during a vehicle emergency, wherein
the inflator is provided in the recess part,
the airbag cushion, in a folded state, includes a stowing portion provided in the recess part and a main expansion portion disposed outside the recess part and extending toward a rear of the seat cushion, and
the main expansion portion is configured to expand and deploy from an upper part of the bridge member toward a rear of the seat so as to push up a seat surface of the seat cushion.

17. The occupant protection device according to claim 16, further comprising:
a reinforcing beam that extends in a seat width direction at a rear portion of the bridge member and is supported by the pair of side frames or the vehicle body structural portion, wherein
the recess part is provided in the reinforcing beam.

18. The occupant protection device according to claim 17, wherein the reinforcing beam has a portion that overlaps an upper part of the bridge member.

19. The occupant protection device according to claim 17 or 18, wherein
the bridge member is a seat pan, and
a plate thickness of the reinforcing beam is thinner than a plate thickness of the seat pan.

20. The occupant protection device according to claim 17 or 18, wherein the reinforcing beam is provided with a bead.

21. The occupant protection device according to claim 17 or 18, wherein
the reinforcing beam includes:
a main body part that is inclined upward toward a front side and in which the recess part is formed; and
a pair of support receiving parts provided at both ends of the main body part and supported by the pair of side frames or the vehicle body structural portion.

22. The occupant protection device according to claim 21, wherein the reinforcing beam further includes a flange extending downwardly from the rear end of the main body part.

23. The occupant protection device according to any one of claims 16 to 18, wherein the inflator is accommodated inside the stowing portion, and the stowing portion is stowed in the recess part.

24. The occupant protection device according to any one of claims 16 to 18, wherein the recess part is positioned near a front end of the spring.
